# FASCICULE DE BREVET EUROPEEN

(11) **EP 3 256 781 B1**
(45) Date de publication et mention de la délivrance du brevet: **03.04.2019**
(21) Numéro de dépôt: 16707864.1
(22) Date de dépôt: 03.02.2016
(51) Int. Cl.: F23R 3/20, F02K 3/10, F23R 3/18, F23R 3/28

(54) **DISPOSITIF ACCROCHE-FLAMME**
FLAMMENHALTERVORRICHTUNG
FLAME-HOLDER DEVICE

(30) Priorité: 10.02.2015 FR 1500266
(43) Date de publication de la demande: 20.12.2017
(73) Titulaire: SAFRAN AIRCRAFT ENGINES, 75015 Paris (FR)
(72) Inventeur: MASSOT, Max, 66720 Latour de France (FR); LELEU, Charles, 33160 Saint Medard En Jalles (FR); LE PANNERER, Brice, 77000 Melun (FR)
(74) Mandataire: Desormiere, Pierre-Louis
(86) Numéro de dépôt international: PCT/FR2016/050225
(87) Numéro de publication internationale: WO 2016/128646

(56) Documents cités:
- FR-A1- 2 894 326
- FR-A1- 2 935 464
- FR-A1- 2 950 416
- US-A- 5 127 224

## Description

### Arrière-plan de l'invention

La présente invention se rapporte au domaine des turboréacteurs à double flux, et plus particulièrement des dispositifs de postcombustion de tels réacteurs.

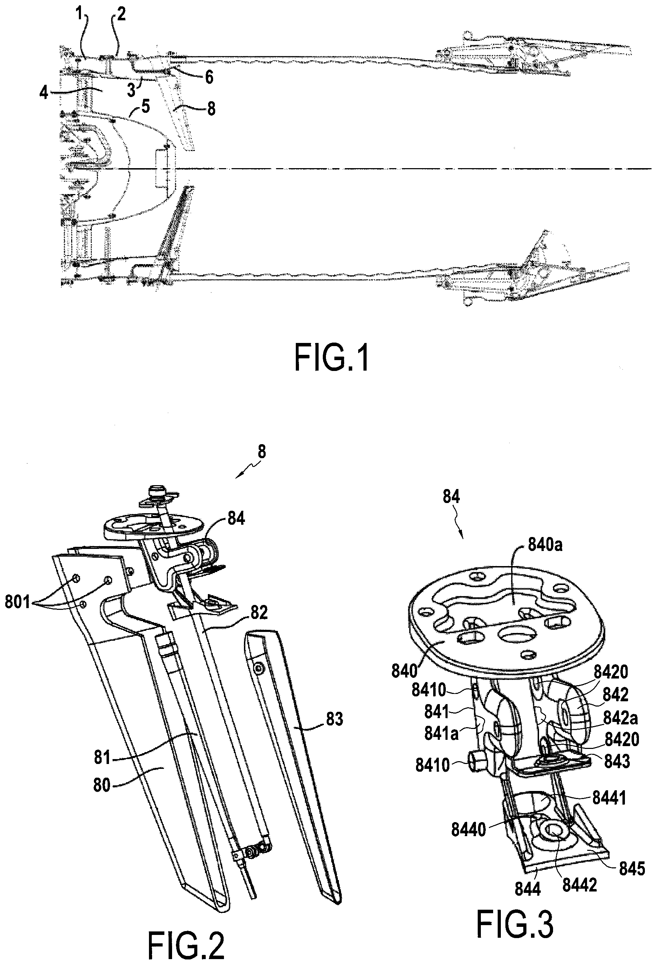

Dans un turboréacteur double flux à postcombustion, avec un arrière-corps du type de celui illustré sur la figure 1, le flux d'air est tout d'abord aspiré par un compresseur basse pression. Une première partie de ce flux d'air en sortie du compresseur basse pression alimente un compresseur haute pression, tandis qu'une seconde partie passe dans un premier passage 1 défini entre un carter annulaire externe 2 et un premier carter annulaire interne 3. Le flux d'air comprimé par le compresseur haute pression alimente une chambre de combustion qui alimente elle-même en gaz de combustion une turbine haute pression suivie d'une turbine basse pression et dont la sortie passe par un second passage 4 défini entre le premier carter annulaire interne 3 (ou tôle de confluence) et un second carter annulaire interne 5 (ou cône d'échappement). Les gaz de combustion qui alimentent le second passage 4 présentent une température élevée et constituent ce que l'on appelle un flux primaire (ou flux chaud). L'air qui alimente le premier passage 1 présente une température sensiblement inférieure à celle du flux primaire et constitue ce que l'on appelle un flux secondaire (ou flux froid).

En aval de la sortie de turbine il est possible de réaliser une augmentation de la poussée par l'injection d'une quantité supplémentaire de carburant dans les flux primaire et secondaire, avec sa combustion au sein d'un canal de postcombustion. Ce système comporte principalement un ensemble de dispositifs 8, dit dispositifs accroche-flammes, et un anneau-brûleur 6. L'anneau brûleur 6 est porté par les dispositifs accroche-flammes 8 et placé dans le flux secondaire, au voisinage de la tôle de confluence 3.

Une partie de l'injection s'effectue à l'aide de l'anneau brûleur 6 qui permet d'injecter de façon homogène une partie du carburant et de stabiliser la flamme.

La structure d'un dispositif accroche-flamme 8 est illustrée sur les figures 2 et 3. Le dispositif accroche-flamme 8, qui est décrit dans le document US 2011/0138773 comprend un bras 80 en forme de goulotte à section en V ou U dont l'arête est tournée vers l'amont par rapport au sens d'écoulement des gaz, un tube de ventilation 81, un injecteur tubulaire de carburant 82 et un écran de protection thermique 83 en forme de tôle incurvée dont la concavité est tournée vers l'aval.

Le dispositif accroche-flamme 8 comprend en outre une pièce d'adaptation 84 (figure 3) comprenant une embase ou platine 840 à partir de laquelle s'étendent deux mâts de fixation 841 et 842, un premier support de fixation 843 de la partie externe de l'anneau brûleur 6 s'étendant entre les deux mâts 841 et 842 au niveau de leur branche centrale et un élément de guidage 844 comportant deux perçages 8440 et 8441 dans lesquels passent respectivement l'injecteur de carburant 82 et le tube de ventilation 81 monté sur les mâts 841 et 842, l'élément de guidage 844 comprenant en outre un deuxième support de fixation 845 de la partie interne de l'anneau brûleur qui comporte un perçage 8442 dans lequel passe un moyen de fixation (non représenté sur la figure 2) de la partie interne de l'anneau brûleur 6.

La pièce d'adaptation 84 permet de positionner et fixer le bras dans la veine, l'embase 840 étant fixée sur la paroi interne du carter externe 2 (figure 1) tandis que le bras 80 est fixé sur les mâts 841 et 842 par des organes de fixation, de type rivet ou boulonnerie, via les trous de fixation 8410 et 8420 présents sur les pattes de fixation et les trous 801 présents sur le bras 80.

En outre du positionnement et du maintien du bras 80, la pièce d'adaptation 84 assure plusieurs autres fonctions, à savoir :
- la prise de pression statique dans le flux d'air secondaire par les deux mâts 841 et 842 dont l'intérieur de chacun est constitué par une cavité creuse 841a et 842a qui débouche dans une cavité supérieure 840a ménagée dans l'embase 840, un orifice de prélèvement 8410, 8420 étant percé dans la partie basse de chacun des mâts 841 et 842 pour assurer l'alimentation en air de la cavité 840a,
- la fixation de l'anneau brûleur par les premier et deuxième supports de fixation 843 et 845,
- le guidage du tube de ventilation par l'élément de guidage 844.

Cependant, la réalisation de toutes ces fonctions impose d'avoir une pièce d'adaptation avec une géométrie complexe qui est couteuse à fabriquer.

En outre, le positionnement et la fixation du bras au moyen de la pièce d'adaptation n'est pas industrielle en ce qu'il est nécessaire de réaliser des appairages et des ajustements par usinage sur chaque pièce produite.

Enfin, un autre inconvénient est qu'au moins la platine, les pattes de fixation et le premier support de fixation d'anneau brûleur sont formés intégralement dans une même pièce en matériau métallique obtenue par exemple par fonderie. La pièce d'adaptation s'étendant à proximité d'une source de chaleur hautes températures (flux chaud), elle doit en outre être réalisée avec un matériau métallique résistant aux hautes températures, donc couteux.

Un autre dispositif accroche-flamme selon le préambule de la revendication 1 est divulgué dans le document FR 2894326 A1.

### Objet et résumé de l'invention

La présente invention a pour but de remédier aux inconvénients de l'art antérieur en proposant un dispositif accroche-flamme pour canal de réchauffe d'un turboréacteur comprenant un bras en forme de goulotte délimitant une cavité et un écran de protection thermique fixé dans la cavité du bras, caractérisé en ce qu'il comprend en outre une platine de fixation comportant un premier mât intégralement formé avec la platine de fixation et un deuxième mât monté de façon amovible sur ladite platine, le bras étant fixé aux premier et deuxième mâts par des organes de fixation.

Dans le dispositif accroche-flamme de l'invention, le positionnement et la fixation du bras sont réalisés par une pièce présentant une géométrie significativement simplifiée par rapport à la pièce d'adaptation de l'art antérieur. La platine de fixation du dispositif de l'invention comporte seulement un mât intégralement formé avec celle-ci, ce premier mât assurant la reprise de la majorité des efforts exercés par l'écoulement sur le bras.

Par ailleurs, le deuxième mât étant monté de façon amovible sur la platine de fixation, il est possible d'ajuster la position de celui-ci sur la platine afin de rattraper des éventuelles variations de forme du bras. Aucun usinage de rattrapage n'est donc nécessaire pour la platine de fixation, et ce même en cas de variations modérées de forme et/ou de dimensions du bras. Le coût de fabrication de la platine de fixation de l'invention est, par conséquent réduit.

Selon un premier aspect du dispositif accroche-flamme de l'invention, les premier et deuxième mâts sont pleins, le dispositif comprenant en outre une pièce creuse de prise de pression statique fixée sur la platine de fixation. La délocalisation de la fonction de prise de pression statique sur un élément externe de la platine permet de simplifier encore la réalisation de celle-ci puisqu'il n'est plus nécessaire de former une cavité interne dans les bras de la platine. La pièce creuse n'ayant que pour fonction la prise de pression statique dans le flux secondaire, elle peut être d'une conception très simple, ce qui la rend peu couteuse à fabriquer.

Selon un deuxième aspect du dispositif accroche-flamme de l'invention, celui-ci comprend en outre un support d'anneau brûleur fixé sur la partie interne des premier et deuxième mâts. Encore une fois, la fonction de support d'anneau brûleur qui était assurée par la platine d'adaptation dans le dispositif accroche-flamme de l'art antérieur est assurée dans le dispositif de l'invention par une pièce externe à la platine de manière à simplifier et réduire le coût de fabrication du dispositif accroche-flamme de l'invention. Le support d'anneau brûleur comporte deux pattes de fixation.

Selon un troisième aspect du dispositif accroche-flamme de l'invention, le support d'anneau brûleur est constitué d'une pièce de tôle, ce qui permet de réaliser le support d'anneau à partir d'un matériau bon marché et facile à conformer. En effet, le support d'anneau brûleur peut être réalisé à partir de tôles et avec un nombre de pliages limité, ce qui réduit encore son coût de fabrication.

Selon un quatrième aspect du dispositif accroche-flamme de l'invention, la platine présente un logement formant un creux sous la surface de ladite platine, la base de fixation du deuxième mât étant maintenue dans ledit logement. Il est ainsi possible de rapporter le deuxième bras sur la platine sans perturber l'écoulement, la base de fixation du deuxième mât étant masquée dans le logement ménagée sur la surface de la platine.

Selon un cinquième aspect du dispositif accroche-flamme de l'invention, la platine de fixation est en titane qui apte à résister aux températures rencontrées par la platine de fixation. Le titane est un matériau bon marché en comparaison à d'autres matériaux métalliques résistants aux hautes températures. L'utilisation du titane est rendue possible car la platine de fixation du dispositif accroche-flamme de l'invention est destinée à être présente uniquement dans le flux secondaire, et à une distance significative du flux primaire (flux chaud). Le titane ne peut pas être utilisé pour la fabrication de la pièce d'adaptation de l'art antérieur puisqu'une partie de celle-ci est très proche du flux primaire.

Selon un sixième aspect du dispositif accroche-flamme de l'invention, celui-ci comprend en outre un raidisseur s'étendant entre la surface de la platine fixation et le premier mât de manière à renforcer la résistance du mât vis-à-vis des efforts générés par l'écoulement.

La présente invention a également pour objet un canal de réchauffe de turboréacteur comprenant au moins un dispositif accroche-flamme selon l'invention.

L'invention a encore pour objet un turboréacteur comprenant un canal de réchauffe selon l'invention.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en coupe d'un arrière-corps de turboréacteur à double flux avec postcombustion ;
- la figure 2 est une demi-coupe en perspective d'un dispositif accroche-flamme selon l'art antérieur,
- la figure 3 est une vue en perspective d'une pièce d'adaptation du dispositif accroche-flamme de la figure 2,
- la figure 4 est une vue en perspective éclatée d'un dispositif accroche-flamme conformément à un mode de réalisation de l'invention,
- la figure 5 est une vue en perspective montrant la face externe de la platine d'adaptation du dispositif accroche-flamme de la figure 4,
- la figure 6 est une vue en perspective montrant la face externe de la platine d'adaptation du dispositif accroche-flamme de la figure 4 avec le deuxième mât positionné sur celle-ci,
- la figure 7 est une vue partielle en perspective montrant le montage de la pièce creuse de prise de pression statique du dispositif accroche-flamme de la figure 4.

### Description détaillée de l'invention

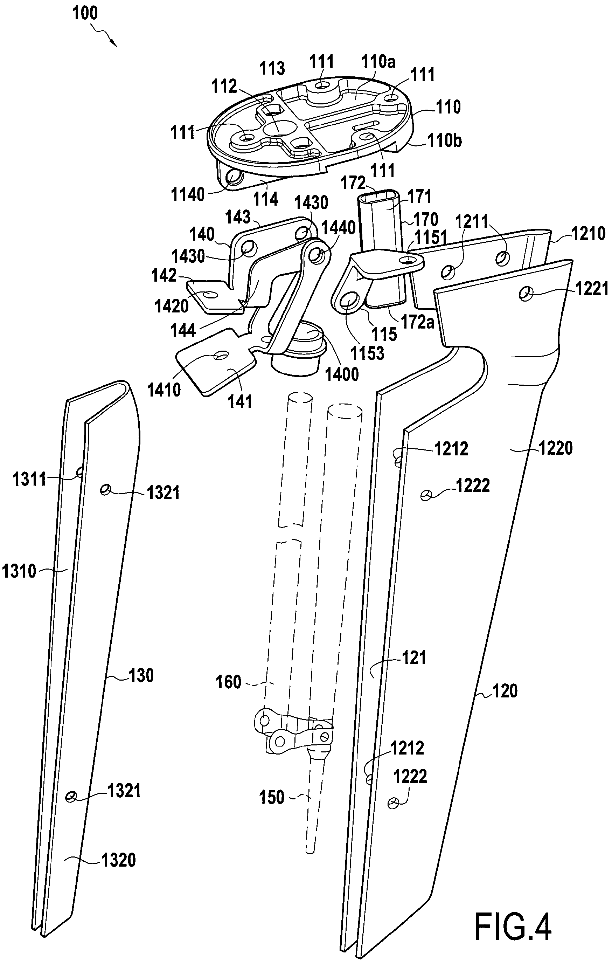

Les figures 4 à 7 illustrent les éléments d'un dispositif accroche-flamme 100 conformément à un mode de réalisation de l'invention. Comme illustré sur la figure 4, le dispositif accroche-flamme 100 comprend une platine de fixation 110, un bras 120 en forme de goulotte délimitant une cavité 121, un écran de protection thermique 130 destiné à être fixé dans la cavité 121 du bras 120, un support de fixation d'anneau brûleur 140, un tube de ventilation 150, un injecteur tubulaire de carburant 160 et une pièce creuse de prise de pression 170.

La platine de fixation 110 est destinée à être fixée sur la paroi interne d'un carter annulaire externe d'arrière-corps d'un turboréacteur double flux postcombustion tel que le carter externe 2 du turboréacteur de la figure 1 au moyen de quatre vis-écrous (non représentées sur la figure 4) passant dans des alésages 111 ménagés dans la platine 110. La platine 110 comporte également un perçage 112 par lequel est destiné à passer l'injecteur de carburant 160 et deux évidements 113 ménagé sur sa face interne 110a pour le logement de têtes de vis dites à tête platée (non représentées sur la figure 4) destinées à assurer la fixation de la tête du tube d'injection de carburant.

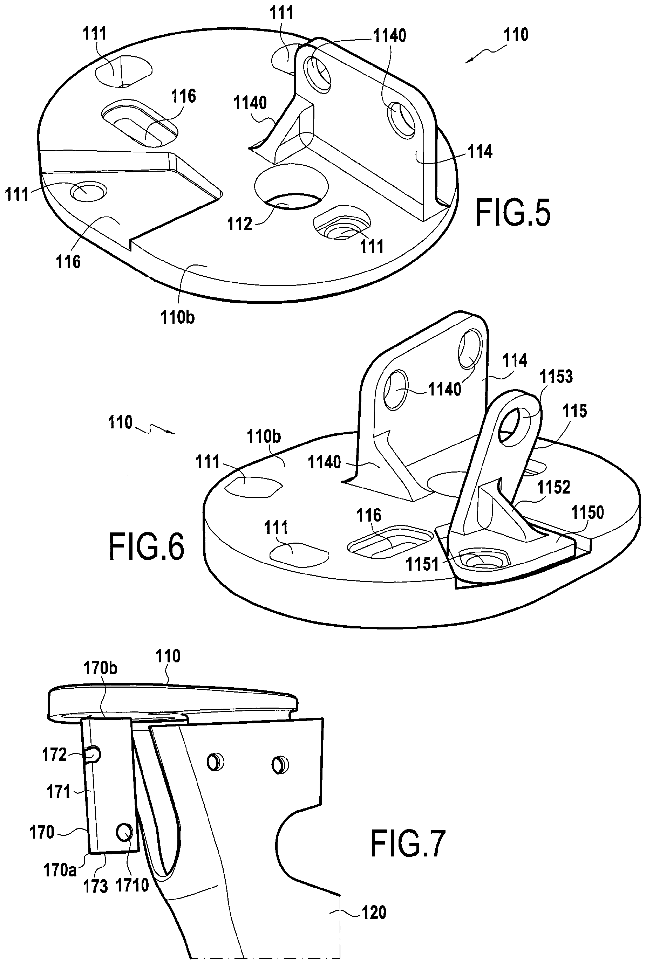

La platine de fixation 110 qui est réalisée en matériau métallique, par exemple en titane, comporte un premier mât 114 intégralement formée avec celle-ci et qui s'étend depuis la face externe 110b de la platine (figures 5 et 6). La platine 110 comprend également un deuxième mât 115 qui est rapporté sur celle-ci de manière amovible et ajustable. Dans le mode de réalisation décrit ici, un logement 116 formant un creux sur la face externe 110b de la platine 110 reçoit la base de fixation 1150 du deuxième mât 115. Le deuxième mât amovible 115 peut ainsi être monté sur la platine 110 sans perturber l'écoulement. La base 1150 comporte un alésage 1151 destiné au passage d'une des vis-écrou de fixation de la platine au carter externe, cette vis-écrou assurant également la fixation du deuxième mât 115 sur la platine 110. L'alésage 1151 est dimensionné de manière à ménager un jeu avec la vis-écrou passant dans celui-ci. Ce jeu permet d'ajuster la position de fixation du deuxième mât 115 sur la platine 110 afin de rattraper des éventuelles variations de forme du bras 120. Aucun usinage de rattrapage n'est donc nécessaire pour la platine de fixation 110, et ce même en cas de variations modérées de forme et/ou de dimensions du bras 120. Dans le mode de réalisation décrit ici le mât amovible 115 comprend en outre un raidisseur 1152. Le premier mât 114 comporte également ici un raidisseur 1140 s'étendant depuis la surface externe 110b de la platine 110.

Le bras 120 est de préférence réalisé en matériau composite à matrice céramique (CMC), c'est-à-dire un matériau composite thermostructural comprenant un renfort en fibres réfractaires, telles que des fibres de carbone ou de carbure de silicium (SiC), densifié par une matrice au moins partiellement céramique telle que qu'une matrice SiC. Des exemples de matériaux CMC sont les composites C/SiC (renfort en fibres de carbone et matrice en carbure de silicium), les composites C/C-SiC (renfort en fibres de carbone et matrice comprenant une phase carbone, généralement au plus près des fibres, et une phase carbure de silicium), les composites SiC/SiC (fibres de renfort et matrice en carbure de silicium) et les composites oxyde/oxyde (fibres de renfort et matrice en alumine).

Le bras 120 est fixé sur la partie externe du premier mât 114 en deux points par des organes de fixation (non représentées sur la figure 4) de type vis-écrou ou rivet passant dans des alésages 1211 et 1140 présents respectivement sur la paroi 1210 du bras 120 et le premier mât 114. Le bras 120 est également fixé sur la partie externe du deuxième bras amovible 115 en un point par un organe de fixation (non représentées sur la figure 4) de type vis-écrou ou rivet passant dans un alésage 1221 ménagé dans la paroi 1220 du bras 120 et un alésage 1153 ménagé dans le deuxième mât 115.

L'écran de protection thermique 130 est également réalisé de préférence en matériau composite CMC. Il est fixé dans la cavité 121 du bras 120 par quatre organes de fixation (non représentés sur la figure 4) de type vis-écrou ou rivet définis passant dans des alésages 1212 et 1222 ménagés respectivement dans les parois 1210 et 1220 du bras 120 et des alésages 1311 et 1321 ménagés respectivement dans les parois 1310 et 1320 de l'écran thermique 130 (figure 4).

Le support de fixation d'anneau brûleur 140 est réalisé en matériau métallique. Dans le mode de réalisation décrit ici, le support 140 est réalisé à partir de tôles pliées et soudées. Le support 140 comporte deux pattes de fixation 141 et 142 destinées à la fixation respectivement de la partie interne et de la partie externe de l'anneau brûleur, les pattes de fixation 141 et 142 comportant chacune un alésage 1410, 1420 pour le passage d'un organe de fixation de type vis-écrou. Le support 140 comporte en outre un perçage 1400 pour le passage et maintien du tube de ventilation 150. Le support de fixation d'anneau brûleur 140 est fixé sur la partie interne du premier mât 114 en deux points par les organes de fixation (non représentées sur la figure 4) passant dans des alésages 1430 et 1440 présents respectivement sur la branche 143 du support 140 et le premier mât 114. Le support 140 est également fixé sur la partie interne du deuxième bras amovible 115 en un point par l'organe de fixation (non représentées sur la figure 4) passant dans un alésage 1440 ménagé dans la branche 144 du support 140 et l'alésage 1153 ménagé dans le deuxième mât 115.

La pièce creuse de prise de pression 170 est réalisée en matériau métallique. Dans le mode de réalisation décrit ici, la pièce 170 comporte une enceinte 171 présentant une section de forme oblongue et délimitant une cavité interne 172 (figures 4 et 7). La cavité interne 172 est fermée par un fond 173 fixé au niveau de l'extrémité inférieure 170a de la pièce 170, la cavité 172 étant ouverte au niveau de l'extrémité supérieure 170b de la pièce 170. La pièce 170 comporte en outre un orifice 1710 au voisinage de son extrémité inférieure. La pièce 170 est destinée à permettre la prise de pression statique dans le flux d'air secondaire qui était auparavant réalisée au travers de la cavité des mâts, comme décrits précédemment pour les mâts 841 et 842 de la pièce d'adaptation 84 du dispositif accroche-flamme de l'art antérieur illustrée sur la figure 3. L'extrémité supérieure ouverte 170b de la pièce 170 est fixée, par exemple par soudure, sur la face externe 110b de la platine de fixation 110 au niveau d'un orifice oblong 116 correspondant à la forme de la section de la pièce 170 (figure 6). L'extrémité 170b est destinée à coopérer avec l'orifice 116 pour assurer l'alimentation en air de la face interne 11a de la platine, l'air étant prélevé dans le flux secondaire par l'orifice 1710.

## Revendications

1. Dispositif accroche-flamme (100) pour canal de réchauffe d'un turboréacteur comprenant un bras (120) en forme de goulotte délimitant une cavité (121) et un écran de protection thermique (130) fixé dans la cavité du bras, comprenant en outre une platine de fixation (110) comportant un deuxième mât (115) monté de façon amovible sur ladite platine, et un premier mât (114), le bras (120) étant fixé aux premier et deuxième mâts (114, 115) par des organes de fixation, **caractérisé en ce que** le premier mât est intégralement formé avec la platine de fixation.

2. Dispositif selon la revendication 1, **caractérisé en ce que** les premier et deuxième mâts (114, 115) sont pleins et **en ce que** ledit dispositif comprend en outre une pièce creuse de prise de pression statique (170) fixée sur la platine de fixation (110).

3. Dispositif selon la revendication 1 ou 2, **caractérisé en ce qu'**il comprend en outre un support d'anneau brûleur (140) fixé sur la partie interne des premier et deuxième mâts (114, 115).

4. Dispositif selon la revendication 3, **caractérisé en ce que** le support d'anneau brûleur (140) comporte deux pattes de fixation (141, 142).

5. Dispositif selon la revendication 3 ou 4, **caractérisé en ce que** le support d'anneau brûleur (140) est constitué d'une pièce de tôle.

6. Dispositif selon l'une quelconque des revendications 1 à 5, **caractérisé en ce que** la platine de fixation (110) comporte un logement (116) formant un creux sous la surface (110b) de ladite platine, la base de fixation (1150) du deuxième mât (115) étant maintenue dans ledit logement.

7. Dispositif selon l'une quelconque des revendications 1 à 6, **caractérisé en ce que** la platine de fixation (110) est en titane.

8. Dispositif selon l'une quelconque des revendications 1 à 7, **caractérisé en ce qu'**il comprend en outre un raidisseur (1140) s'étendant entre la surface (110b) de la platine fixation (110) et le premier mât.

9. Canal de réchauffe de turboréacteur comprenant au moins un dispositif accroche-flamme (100) selon l'une quelconque des revendications 1 à 8.

10. Turboréacteur comprenant un canal de réchauffe selon la revendication 9.

## Patentansprüche

1. Flammenhaltervorrichtung (100) für einen Heizkanal eines Turbotriebwerks, umfassend einen rinnenförmigen Arm (120), der einen Hohlraum (121) begrenzt, und einen Wärmeschutzschirm (130), der in dem Hohlraum des Armes befestigt ist, ferner umfassend eine Befestigungsplatte (110), die einen zweiten Mast (115), der abnehmbar auf der Platte befestigt ist, und einen ersten Mast (114) umfasst, wobei der Arm (120) durch Befestigungselemente an dem ersten und zweiten Mast (114, 115) befestigt ist, **dadurch gekennzeichnet, dass** der erste Mast einstückig mit der Befestigungsplatte gebildet ist.

2. Vorrichtung gemäß Anspruch 1, **dadurch gekennzeichnet, dass** der erste und zweite Mast (114, 115) massiv sind und dass die Vorrichtung ferner einen Hohlkörper zur Erfassung des statischen Drucks (170) umfasst, der auf der Befestigungsplatte (110) befestigt ist.

3. Vorrichtung gemäß Anspruch 1 oder 2, **dadurch gekennzeichnet, dass** sie ferner einen Brennerringhalter (140) umfasst, der am inneren Abschnitt des ersten und zweiten Mastes (114, 115) befestigt ist.

4. Vorrichtung gemäß Anspruch 3, **dadurch gekennzeichnet, dass** der Brennerringhalter (140) zwei Befestigungslaschen (141, 142) aufweist.

5. Vorrichtung gemäß Anspruch 3 oder 4, **dadurch gekennzeichnet, dass** der Brennerringhalter (140) aus einem Blechteil besteht.

6. Vorrichtung gemäß einem der Ansprüche 1 bis 5, **dadurch gekennzeichnet, dass** die Befestigungsplatte (110) ein Gehäuse (116) umfasst, das einen Hohlraum unter der Oberfläche (110b) der Platte bildet, wobei die Befestigungsbasis (1150) des zweiten Mastes (115) in dem Gehäuse gehalten wird.

7. Vorrichtung gemäß einem der Ansprüche 1 bis 6, **dadurch gekennzeichnet, dass** die Befestigungsplatte (110) aus Titan besteht.

8. Vorrichtung gemäß einem der Ansprüche 1 bis 7, **dadurch gekennzeichnet, dass** sie ferner eine Versteifung (1140) umfasst, die sich zwischen der Oberfläche (110b) der Befestigungsplatte (110) und dem ersten Mast erstreckt.

9. Heizkanal eines Turbotriebwerks, umfassend mindestens eine Flammenhaltervorrichtung (100) gemäß einem der Ansprüche 1 bis 8.

10. Turbotriebwerk, umfassend einen Heizkanal gemäß Anspruch 9.

## Claims

1. A flame-holder device (100) for a reheat channel of a turbojet, the device comprising an arm (120) in the form of a trough defining a cavity (121) and a heat shield (130) fastened in the cavity of the arm, the device further comprisin a fastener plate (110) comprising a second leg (115) removably mounted on said plate, and a first leg (114), the arm (120) being fastened to the first and second legs (114, 115) via fastener members, **characterized in that** the first leg is integrally formed with the fastener plate.

2. A device according to claim 1, **characterized in that** the first and second legs (114, 115) are solid, and **in that** said device further comprises a hollow part (170) for static pressure takeoff that is fastened to the fastener plate (110).

3. A device according to claim 1 or claim 2, **characterized in that** it further comprises a burner ring support (140) fastened to the internal portions of the first and second legs (114, 115).

4. A device according to claim 3, **characterized in that** the burner ring support (140) has two fastener tabs (141, 142) .

5. A device according to claim 3 or claim 4, **characterized in that** the burner ring support (140) is constituted by a piece of sheet metal.

6. A device according to any one of claims 1 to 5, **characterized in that** the fastener plate (110) includes a housing (116) forming a recess under the surface (110b) of said plate, the fastener base (1150) of the second leg (115) being held in said housing.

7. A device according to any one of claims 1 to 6, **characterized in that** the fastener plate (110) is made of titanium.

8. A device according to any one of claims 1 to 7, **characterized in that** it further comprises a stiffener (1140) extending between the surface (110b) of the fastener plate (110) and the first leg.

9. A turbojet reheat channel including at least one flame-holder device (100) according to any one of claims 1 to 8.

10. A turbojet including a reheat channel according to claim 9.
